(19) Europäisches Patentamt

European Patent Office

Office européen des brevets

(11) **EP 3 502 076 A1**

(12) **EUROPEAN PATENT APPLICATION**

(43) Date of publication:
26.06.2019 Bulletin 2019/26

(51) Int Cl.:
*C03C 17/28* *(2006.01)*          *C11D 3/00* *(2006.01)*
*C11D 3/04* *(2006.01)*

(21) Application number: 17210515.7

(22) Date of filing: 22.12.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **ARKEMA B.V.**
**3196 KE Vondelingenplaat-Rotterdam (NL)**

(72) Inventor: **HOEKMAN, Leendert Cornelis**
**4461 NM GOES (NL)**

(74) Representative: **Senff, Holger**
**ARKEMA France**
**Département Propriété Industrielle**
**420, rue d'Estienne d'Orves**
**92705 Colombes Cedex (FR)**

(54) **PROCESS FOR TREATMENT OF GLASS CONTAINERS**

(57)     The present invention relates to a process for treatment of glass container or glass tableware.

In particular it relates to a process for treatment of glass container comprising a cleaning or washing step and a step for applying a coating to the surface of the glass containers.

More particularly the present invention relates to process for treatment of returnable glass container comprising a cleaning or washing step and a step for applying a coating to the surface of the glass containers.

EP 3 502 076 A1

**Description**

**[Field of the invention]**

The present invention relates to a process for treatment of glass container or glass tableware.
In particular it relates to a process for treatment of glass container comprising a cleaning or washing step and a step for applying a coating to the surface of the glass containers.
More particularly the present invention relates to process for treatment of returnable glass container or comprising a cleaning or washing step and a step for applying a coating to the surface of the glass containers.

**[Technical problem]**

Hollow glass containers are produced from molten glass at molds at high temperatures. As the surface of these containers is fragile and in order to preserve the strength of the glass and to prevent any direct glass to glass contact of the respective containers in order to avoid damage, they are surface coated directly after forming of the container.
Such a coating includes tin or, titanium or other heat decomposable metallic or organometallic based compounds. This is the basis of the coating needed for protection of the glass container surface from damage such as abrasions and scratches, which result in a loss of strength for the glass container. The need for high tensile strength in a glass container is particularly acute when containers are mass produced, move rapidly in close proximity along high speed conveyor lines.
Nowadays in glass container manufacturing a two-step coating is applied in order to obtain scratch resistance and slipperiness of the glass containers. So the glass containers typically receive two surface coatings, one at the *hot end,* just before annealing and one at the *cold end* just after annealing.
In the first step, the so called hot-end coating (HEC) is applied by means of chemical vapor deposition (CVD) of a metal containing compound on the freshly formed, hot and single or double line positioned glass containers, as mentioned before.
In a second step, the so called cold end coating (CEC) is applied, usually by spraying means, in form of an aqueous dispersion. Usually partly oxidized polyethylene wax dispersions are applied. With this additional coating on glass containers surface a long-lasting protection is provided, consisting in scratch resistance and prevention of scuffing of glass surfaces during filling and transportation.
Glass containers can be recycled and reused. If reused, such returnable glass containers are collected, cleaned and refilled.
The cleaning step of returnable glass containers includes usually caustic washing. During the caustic washing the cold end coating and the hot end coating are gradually eroded. Unprotected bare glass surface is exposed after a few cycles and scuffing begins. Therefore a protective coating can be applied after washing and before refilling, however with eroded glass surface and reduced or even removed hot end coating, the adhesion of the protective coating on the surface of the glass container is much less than the initial cold end coating.
The loss of the initial cold end coating and the cold end coating, especially by caustic washing, yields to a loss of the initial strength of the glass containers, scuffing appears and the burst pressure of the recycled glass containers decreases. This decrease of the burst pressure and increase of scuffing is already very significant during the first 5 to 10 recycling turns, increasing tremendously the risk of container breaking and limiting the life time of glass container.
Sometimes the surface scuffing is just masked on a recycled glass container after washing.
There is still a high need for more efficient glass treatment and glass treatment process and glass coating for returnable glass containers.
An objective of the present invention is to increase the life time of returnable glass containers.
Another objective of the present invention is to provide a process for increasing the life time of returnable glass containers.
Another objective of the present invention is to reduce the rate of loss of burst pressure of the returnable glass containers during recycling. The burst pressure of a glass container recycled or reused 10 times should be desirably 50% of the initial burst pressure of a neat container coming from glass production plant. Preferably the burst pressure of a glass container recycled 25 times, should be desirably 50% of the initial burst pressure of a neat container coming from glass production plant.
Still another objective of the present invention is to provide a process that allows to protect or reduce the destruction of the initial hot end coating, while reducing the loss of burst pressure of the glass containers during recycling.
A still other objective of the present invention is to have a process that allows the reduction of the thickness of the containers or in other words the container weight, while still having a sufficient burst pressure of the recycled container.
Still another objective of the present invention is to strongly improve the conveying of the recycled containers during the filling process.

An additional objective of the present invention is to provide a process that avoids scuffing on the surface of the glass containers, notably recycled returnable glass containers.

A still additional objective of the present invention is to provide a process that keeps original surface appearance of the containers and requires no masking coating.

Surprisingly it has been found that with a washing process combined with the specific coating application, some or several of before mentioned problems can be solved.

**[BACKGROUND OF THE INVENTION ]Prior art**

The document US 4,001,133 describes a method of washing glassware and an inhibited cleaning solution. The glassware is washed with an inhibited aqueous caustic soda cleaning solution comprising a soluble zinc compound, synthetic organic phosphate ester anionic surfactant, low foaming synthetic alkoxylated nonionic surfactant and a sequestering agent. The protective coating is a polyethylene applied on a metal oxide layer. The cleaning solution prevents unsightly discoloration and preserves strength.

The document US 4,908,148 describes a rinse additive compositions providing glassware protection comprising insoluble zinc compounds for inhibiting glassware corrosion which can occur in an automatic dishwasher.

The document US2006/0128602 describes a ware washing composition for use in automatic dishwashing machines, and method for manufacturing and using it. The warewashing detergent composition comprises a cleaning agent, an alkaline source and a corrosion inhibitor. The corrosion inhibitor includes sources of aluminum ions and zinc ions..

None of the cited prior art discloses a process that concerns the coating application and the coating that is reapplied on the cleaned glass container nor the combination of cleaning step and applying the coating.

**[Brief description of the invention]**

Surprisingly it has been discovered that a process for treatment of glass container said process comprises the steps of:

> i) cleaning by washing the glass containers with a washing composition comprising a zinc or aluminium compound at temperature less than 90°C and
> ii) applying a coating on the surface of the glass containers with a composition comprising a wax compound (W1)

yields to recycled glass containers that preserve their initial hot end coating and have a reduced loss of burst pressure.

Surprisingly it has also been discovered that a process for treatment of glass container said process comprises the steps of:

> i) cleaning by washing the glass containers with a washing composition comprising a zinc or aluminium compound at temperature less than 90°C and
> ii) applying a coating on the surface of the glass containers with a composition comprising a wax compound (W1)

increases the life time of returnable glass containers and allows more cycles.

Surprisingly it has additionally been discovered that a process for treatment of glass container said process comprises the steps of:

> i) cleaning by washing the glass containers with a washing composition comprising a zinc or aluminium compound at temperature less than 90°C and
> ii) applying a coating on the surface of the glass containers with a composition comprising a wax compound (W1)

allows to reduce the thickness of returnable glass containers while preserving at least the same burst pressure as thicker returnable glass containers or more heavier containers not treated by this kind of process.

Surprisingly it has also been discovered that the use of a washing composition comprising a zinc or aluminium containing compound for washing a returnable glass container at temperature less than 90°C and a the use of a coating composition comprising a wax compound for coating application on the surface of the glass containers (W1) yields to recycled glass containers that preserve their initial hot end coating and have a reduced loss of burst pressure and sufficient lubricity.

*[Detailed description of the invention]*

In a first aspect, the present invention relates to a process for treatment of glass container said process comprises the steps of:

i) cleaning by washing the glass containers with a washing composition comprising a zinc or aluminium compound at temperature less than 90°C and
ii) applying a coating on the surface of the glass containers with a composition comprising a wax compound (W1).

In a second aspect, the present invention relates to the use of a washing composition comprising a zinc or aluminium containing compound for washing a returnable glass container at temperature less than 90°C and a the use of a coating composition comprising a wax compound (W1) for coating application on the surface of the glass containers.
In a third aspect the present invention relates to a glass container cleaned by a washing composition comprising a zinc or aluminium compound at temperature less than 90°C and having a coating on the surface of said glass containers with a composition comprising a wax compound (W1).
By the term "recycling" as used in the present invention is denoted that the glass container is reused and refilled as container. This excludes the recycling of container by melting the glass.
By saying that a range is from x to y in the present invention, it is meant that the upper and lower limit of this range are included, equivalent to at least x and up to y.
By saying that a range is between x and y in the present invention, it is meant that the upper and lower limit of this range are excluded, equivalent to more than x and less than y.
**With regard to the process for treatment of glass containers, according to the present invention,** it comprises the steps of:

i) cleaning by washing the glass containers with a washing composition comprising a zinc or aluminium compound at temperature less than 90°C and
ii) applying a coating on the surface of the glass containers with a composition comprising a wax compound (W1).

Preferably the cleaning step i) takes place before the coating step ii).
Preferably the washing composition is an aqueous composition.
Preferably the washing composition comprises an alkaline source.
Preferably the composition comprising a wax compound (W1) is an aqueous composition.
Additionally the process can comprise optionally other steps. One additional step can be iii) pasteurizing. Either the glass containers already filled are pasteurized or the liquid filled into the containers is pasteurizd.
The pasteurizing can take place by means of spraying the refilled containers with a hot water spray. The hot water spray for instance takes place at about 65°C for about 20 to 30 minutes. This can be done by a tunnel pasteurisation.
Also a flash Pasteur could be used, where only the liquid filled into the container is pasteurized. For example the beer, fruit or vegetable juice, milk is pasteurized at 70°C to 74°C for 15 to 30 seconds and then filled into the cleaned containers.
**With regard to the cleaning or washing step according to the present invention,** it takes place at a temperature below 90°C. The temperature refers to the temperature of the washing composition. The temperature refers to the maximum temperature during the whole washing step. The washing step may have sub steps. In this invention the washing step is considered the cleaning or washing of the glass container, with the washing composition. It is possible that there are intermediate rinsing steps during the washing step that are below the indicated temperature interval or below the preferred minimal temperature. It is also possible that there are intermediate rinsing steps during the washing step between the cleaning or washing of the glass container, with the washing composition.
Preferably the temperature of the washing step is below 88°C, more preferably below 86°C, still more preferably below 84°C, even more preferably below 82°C.
Preferably the temperature of the washing step is above 40°C, more preferably above 50°C.
Preferably the temperature of the washing step is between 40°C and 88°C, more preferably between 50°C and 86°C.
**With regard to the washing composition of** the cleaning step of the process of the present invention, it is a zinc or aluminium compound and preferably the zinc or aluminium compound is in form of compound comprising a zinc or aluminium ion. The source of aluminum ion and the source of zinc ion can be provided as organic salts, inorganic salts, and mixtures thereof.
Exemplary sources of zinc ions include zinc salts such as zinc chloride, zinc bromide, zinc sulfate, zinc nitrate, zinc iodide, zinc thiocyanate, zinc fluorosilicate, zinc dichromate, zinc chlorate, sodium zincate, zinc gluconate, zinc acetate, zinc benzoate, zinc citrate, zinc lactate, zinc formate, zinc bromate, zinc bromide, zinc fluoride, zinc fluosilicate, and zinc salicylate.

In a first preferred embodiment the zinc salt is chosen from zinc chloride, zinc bromide, zinc iodide, zinc sulfate, zinc nitrate and zinc acetate.

Exemplary sources of aluminum ion include aluminum salts such as sodium aluminate, aluminum bromide, aluminum chlorate, aluminum chloride, aluminum iodide, aluminum nitrate, aluminum sulfate, aluminum acetate, aluminum formate, aluminum tartrate, aluminum lactate, aluminum oleate, aluminum bromate, aluminum borate, aluminum potassium sulfate, aluminum zinc sulfate and aluminum phosphate.

In a first preferred embodiment the washing composition comprises a zinc compound.

In a second preferred embodiment the washing composition comprises an aluminum compound.

In a third preferred embodiment the washing composition comprises a zinc and an aluminum compound.

The quantity of the zinc or aluminium ion in the washing composition is at least 0.00025mol/l, preferably at least 0.0005 mol/l, more preferably at least 0.001 mol/l still more preferably at least 0.002 mol/l, advantageously at least 0.005 mol/l and more advantageously at least 0.01 mol/l.

The quantity of the zinc or aluminium ion in the washing composition is at most 0.1mol/l, preferably at most 0.05mol/l and more preferably at most 0.04 mol/l, still more preferably at most 0.03 mol/l, advantageously at most 0.025mol/l and more advantageously at most 0.02mol/l.

Preferably the quantity of the zinc or aluminium ion in the washing composition is between 0.00025mol/l and 0.1mol/l, more preferably between 0.001 mol/l and 0.04 mol/l, still more preferably between 0.002 mol/l and 0.03 mol/l ,advantageously between 0.005 mol/l and 0.025mol/l and more advantageously between 0.01mol/l and 0.02 mol/l.

Preferably the pH of the washing composition is at least 8. More preferably the pH of the washing composition is at least 12, still more preferably at least 12.5, advantageously at least 13, more advantageously at least 13.1 and most advantageously at least 13.2. The pH of the washing composition is obtained by adding at least one alkaline source. The pH of the washing composition is measured with a pH meter.

The washing composition comprises one or more alkaline sources. The alkali source can be chosen among compounds generating OH- ions in aqueous solution. Preferably the alkaline source is an alkali metal hydroxide. This can be for example sodium hydroxide or potassium hydroxide. In the washing composition there are hydroxide ions OH-.

The quantity of the OH- ions in the washing composition is at least 0.05mol/l, preferably at least 0.075mol/l, more preferably at least 0.1mol/l, still more preferably at least 0.15 mol/l and advantageously at least 0.2 mol/l.

The quantity of the OH- ions in the washing composition is at most 2.5 mol/l, preferably at most 2 mol/l, still more preferably at most 1.5 mol/l and advantageously at most 1 mol/l.

Preferably the quantity of the OH- ions in the washing composition is between 0.05mol/l and 2.5mol/l, more preferably between 0.075 mol/l and 2 mol/l, still more preferably between 0.1 mol/l and 1.5 mol/l and advantageously between 0.2 mol/l and 1 mol/l.

The molar ratio between the zinc or aluminium ion in the washing composition and the OH- ions in the washing composition is at least 0.002, preferably at least 0.0025, more preferably at least 0.003 and advantageously at least 0.005, and most advantageously at least 0.01.

The molar ratio between the zinc or aluminium ion in the washing composition and the OH- ions in the washing composition is at most 0.5, preferably at most 0.4, more preferably at most 0.3, advantageously at most 0.2 and most advantageously at most 0.1.

The molar ratio between the zinc or aluminium ion in the washing composition and the OH- ions in the washing composition and is most advantageously between 0.01 and 0.10.

In one embodiment the molar quantity of the zinc or aluminium ion in the washing composition in function of the OH- ions in the washing composition is according to formula (1):

$$C_2 = B * C_1 + A \tag{1}$$

wherein $C_2$ is the concentration zinc or aluminium ion in the washing composition in mol/l, $C_1$ is the concentration of the OH-ions in mol/l, B is a factor and A is a summand. The summand A is between -0.001 and 0.04. The factor B is between 0.025 and 0.045.

More preferably formula (1) applies especially to an interval of the concentration of the OH- ions from 0.05mol/l to 1mol/l and advantageously to an interval of the concentration of the OH- ions from 0.1mol/l to 1mol/l.

**With regard to the coating applying step according to the present invention,** it is made by contact between coating composition and the container with a coating application method. The method can be spraying or dipping or using a coating applicator.

The means for applying the coating by spraying comprise spraying means.

The means for applying the coating by dipping comprise a recipient containing the coating composition in which the containers are dipped.

The coating applicator can be a brush, capillary, sponge, fibre or the like. The coating material is applied on the surface of the container via the contact area between the coating applicator and container surface.

Preferably coating composition is applied by spraying.

The coating composition comprising a wax compound (W1) is preferably applied as an aqueous dispersion. The dispersion comprises surfactant or surfactants and the wax compound (W1).

A dispersion according to the invention is a colloidal system at ambient temperature with a continuous liquid phase and a discontinuous solid phase that is distributed throughout the continuous phase. By ambient temperature is meant the interval between 20°C and 25°C. After the application of the coating material the continuous liquid phase evaporates and the discontinuous solid phase forms the coating.

The surfactant can be can be non-ionic, anionic, cationic or zwitterionic. Preferably, the surfactant(s) is cationic.

Preferably the coating composition applied on the surface of the glass containers comprises surfactant or surfactants and the wax compound (W1).

The quantity of the surfactant or surfactants in the coating composition is comprised between 0.5wt% and 50wt% relative to the coating composition applied comprising surfactant or surfactants and the wax compound (W1). In this calculation only the solids coating composition are considered namely the surfactant or surfactants and the wax compound (W1).

Preferably the quantity of the surfactant or surfactants in the coating composition is comprised between 5wt% and 50wt%, more preferably between 10wt% and 45wt%, still more preferably between 10wt% and 40wt%, even more preferably between 15wt% and 40wt%, advantageously between 20wt% and 40wt% and more advantageously between 20wt% and 40wt%.

Preferably the aqueous dispersion that is applied on the surface of a glass container comprises between 0.05wt% and 5wt% of coating composition comprising the wax compound (W1) according to the invention.

Preferably the aqueous dispersion that is applied on the surface of a glass container comprises between 0.1 and 4wt% of coating composition comprising the wax compound (W1) according to the invention, more preferably between 0.2 and 4wt%, still more preferably between 0.5wt% and 4wt% and even more preferably between 0.5wt% and 3.5wt%.

The coating composition comprising the wax compound (W1) that is applied on the surface of a glass container as an aqueous dispersion can be obtained by dilution of a more concentrated dispersion.

The more concentrated aqueous dispersion comprising the wax compound (W1) has a solid content between 5wt% and 50wt%, based on wax compound (W1) and surfactant or surfactants.

Preferably the more concentrated aqueous dispersion comprising the wax compound (W1) has a solid content between 5wt% and 60wt%, based on wax compound (W1) and surfactant or surfactants, more preferably between 10wt% and 55wt%, still more preferably between 10wt% and 50wt% and even more preferably between 15wt% and 45wt%.

**With regard to the wax compound (W1) of** the coating applying step of the process of the present invention, it is a low melting point wax in comparison to the partly oxidized polyethylene waxes usually used. The wax compound (W1) can be pure or mixture of wax compounds, as long as the mixture is possessing the melting point as given below and preferably the melting point and saponification number as given below.

The melting point of the wax compound (W1) is expressed as drop melting point. The melting point is evaluated as drop melting point according to ISO 6244:1982. Preferably the melting point of the wax compound (W1) is below 85°C. More preferably the melting point of the wax compound (W1) is below 84°C, still more preferably below 83°C, even still more preferably below 82°C, advantageously below 81°C and more advantageously below 80°C.

More preferably the melting point of the wax compound (W1) is above 60°C. Still more preferably the melting point of the wax compound (W1) is above 61°C, even still more preferably above 62°C, even still more preferably above 63°C, advantageously above 64°C and more advantageously above 65°C.

More preferably the melting point of the wax compound (W1) is between 60°C and 85°C. Still more preferably the melting point of the wax is between 61°C and 84°C, even still more preferably between 62°C and 83°C, even still more preferably between 63°C and 82°C, advantageously between 64°C and 81°C and more advantageously between 65°C and 80°C.

The saponification number of wax compound (W1) is above 20 mg KOH/g. More preferably the saponification number of the wax compound (W1) is above 25 mg KOH/g, still more preferably above 30 mg KOH/g, even still more preferably above 33 mg KOH/g, advantageously above 35 mg KOH/g and more advantageously above 40 mg KOH/g.

The saponification number of wax compound (W1) is below 250 mg KOH/g. More preferably the saponification number of the wax compound (W1) is below 225 mg KOH/g, still more preferably below 220 mg KOH/g, even still more preferably below 210 mg KOH/g, advantageously below 200 mg KOH/g and more advantageously below 190 mg KOH/g.

More preferably the saponification number of wax compound (W1) is between 20 mg KOH/g and 250 mg KOH/g, still more preferably between 25 mg KOH/g and 225 mg KOH/g, even still more preferably between 30 mg KOH/g and 220 mg KOH/g, advantageously between 33 mg KOH/g and 210 mg KOH/g, more advantageously between 35 mg KOH/g and 200 mg KOH/g and even more advantageously between 40 mg KOH/g and 200 mg KOH/g.

The acid number of the wax compound (W1) can be above 1 mg KOH/g. More preferably the acid number of the wax compound (W1) is above 2 mg KOH/g, still more preferably above 2.5 mg KOH/g, even still more preferably above 3 mg KOH/g, advantageously above 3.5 mg KOH/g and more advantageously above 4 mg KOH/g. The acid number can be measured according to ASTM D1386 "Standard Test Method for Acid Number (Empirical) of Synthetic and Natural Waxes".

The acid number of the wax compound (W1) can be below 25 mg KOH/g. More preferably the acid number of the wax compound (W1) is below 24 mg KOH/g, still more preferably below 23 mg KOH/g, even still more preferably below 22 mg KOH/g, advantageously below 21 mg KOH/g and more advantageously below 20 mg KOH/g.

More preferably the acid number of the wax compound (W1) is between 2 mg KOH/g and 24 mg KOH/g, still more preferably between 2.5 mg KOH/g and 23 mg KOH/g, even still more preferably between 3 mg KOH/g and 22 mg KOH/g, advantageously between 3.5 mg KOH/g and 21 mg KOH/g and more advantageously between 4 mg KOH/g and 20 mg KOH/g.

The wax compound (W1) can be made of natural or synthetic waxes or a mixture of blend of both. Useful natural waxes include vegetable waxes, animal waxes and mixtures thereof, as long as they have the required melting point defined before. Preferably wax compound (W1) has the required melting point and saponification number as defined before.

The wax compound (W1) according to the invention comprises at least 50wt% of a compound comprising an ester function, preferably 51wt, more preferably 52wt%, even more preferably 53wt%, advantageously 54wt% and more advantageously 55wt%. The compound comprising an ester function or simply ester is preferably an organic ester. The organic ester is made from at least an alcohol and a fatty acid. The compound comprising the ester function can be a monoester, a diester, a triester or mixtures thereof.

The alcohol of the organic ester can have one or several hydroxyl groups. Preferably the alcohol of the organic ester is water soluble. By water soluble is meant that the alcohol is either completely miscible with water or that it has a solubility greater than 0.005 mol/100g water at 1013mbar and 25°C. Preferably the solubility greater than 0.01 mol/100g water at 1013mbar and 25°C, and more preferably the solubility greater than 0.025 mol/100g water at 1013mbar and 25°C.

Examples of alcohols in the present invention are methanol, ethanol, propanol, butanol; pentanol, hexanol; 1,2 ethandiol; 1,3 propanediol; 1,2 propanediol; 1,4 butanediol; 1,2 butanediol; 1,3 butanediol; 1,5 pentanediol; 1,2 pentanediol; 1,3 pentanediol; 1,6 hexane diol; diethylene glycol, triethylene glycol; glycerol or mixtures thereof, but not limited to this list.

The fatty acid is chosen from long and very long chain hydrocarbons fatty acids. The hydrocarbon has at least 12 carbon atoms, preferably at least 14 carbon atoms. The hydrocarbon has at most 52 carbon atoms, preferably at most 50 carbons.

The hydrocarbon chain of the fatty acid can be a linear or branched alkyls, alkenyls.

Examples of the acid are lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid, pentacosylic acid, cerotic acid, heptacosylic acid, montanic acid, nonacosylic acid, melissic acid, henatriacontylic acid, lacceroic acid, psyllic acid, geddic acid, ceroplastic acid, hexatriacontylic acid, heptatriacontanoic acid, octatriacontanoic acid, myristoleic acid, palmitoleic acid, sapienic acid, oleic acid, elaidic acid, vaccenic acid, linoleic acid, linoelaidic acid, $\alpha$-linolenic acid, arachidonic acid, eicosapentaenoic acid, erucic acid, docosahexaenoic acid.

The organic ester, that is made from at least an alcohol and a fatty acid, of the wax compound (W1), can also be a mixture of different alcohols and fatty acids as listed above.

In a first embodiment the wax compound (W1) is chosen from a mixture comprising at least two compounds chosen from organic ester, fatty acid and alcohol.

In one embodiment the wax compound (W1) is chosen from a mixture comprising at least two compounds chosen from, monoesters, diesters, triesters, hydroxy monoesters, hydroxypolyesters, acid esters, acid polyesters, hydrocarbons, fatty acids, fatty alcohols. Preferably the ratio of free fatty acids and fatty alcohols is less than 80wt% in the wax compound (W1).

In another embodiment the wax compound (W1) is chosen from a mixture comprising at least two compounds chosen from organic esters, hydrocarbons, fatty acids. Preferably the ratio of free fatty acids is less than 80wt% in the wax compound (W1)

In still another embodiment the wax compound (W1) is chosen from a mixture comprising aliphatic esters, $\omega$-hydroxycarboxylic acids and fatty alcohols. Preferably the ratio of free fatty alcohols is less than 80wt% in the wax compound (W1)

In still another embodiment the wax compound (W1) is chosen from a mixture comprising an ester from a diol and fatty acids. Preferably the diol has less than 6 carbons.

All the above mentioned embodiments for the wax compound (W1) comprise at least 50wt% of a compound comprising an ester function as defined before.

For all the above mentioned embodiments for the wax compound (W1) it have a melting point below 90°C and preferably below 85°C.

As the wax compound (W1) having a melting point below 85°C can be a mixture, the melting point is not a single peak or point, but could also be a range. However the melting range is below the indicated temperature of the melting point.

More preferably all the above mentioned embodiments for the wax compound (W1) have a saponification number of wax compound (W1) that is above 20 mg KOH/g.

Optionally the wax compound (W1) used in the present invention, has a low needle penetration. By low is meant that the needle penetration is less than $6*10^{-1}$ mm, advantageously less than $5*10^{-1}$ mm. The needle penetration can be estimated according to ASTM D1321.

**With regard to the glass container of** the present invention, it is a bottle or a jar. The bottle can be a beer, a milk or a soft drink bottle, wine bottles.

Preferable the glass container is a returnable glass container.

**[Methods of evaluation]**

As a washing machine a Miele disinfector type G7835 CD was used. The effective washing time is 13.5 minutes and the total cycle time is 65 minutes. The wash temperature was between 60°-80°C.

The line simulator used was an equipment from AGR International Inc .Line simulation was done under wet conditions at a speed of 30rpm.

The pasteurization was made with a Miele disinfector type G7835, with program 3-pasteur at a water temperature of 65°C and a total cycle time of 40 minutes.

One cycle consists of washing (caustic washing), coating application, line simulation for 1 minute, pasteurization, line simulation of 1 minute, certain samples are measured after x cycles, measuring of samples notably slip angle, HEC thickness and burst pressure plus visual appearance of containers.

The thickness of the hot end coating (HEC) is measured by method of estimation the amount of light reflection from a coated glass surface in comparison to a measurement taken from a known calibrated thickness standard with a Hot End Coating Measuring System from AGR International Inc.. The thickness is expressed in CTU (coating thickness unit; 1 CTU=0.25nm in the case of $SnO_2$)

The burst pressure of the containers is measured according to ASTM C147-86(2015) using a Ramp Pressure Tester 2 from AGR International Inc., where the Tester records the pressure at which the bottle breaks.

The slip angle is estimated with a tilt table from the company AGR International Inc.. The tilt table measures the angle when a bottle slips in contact with an identical glass surface. This gives an appreciation of the lubricity of the surface. Three glass containers are placed on the table in a pyramidal configuration. After the start button is pushed, an electric motor increases the angle of inclination of the table upon which the pyramid of bottles is resting at a rate of 3.6° per second. The bottom two bottles are constrained and do not move during testing. The top container is free to slide and when the tilt angle becomes great enough to overcome the frictional forces between the containers, it begins to slide and contacts a trip bar. When the bottle depresses the trip bar, a switch is opened in the electronic circuitry of the Tilt Table simultaneously stopping the drive motor and applying a brake to the inclined table. This feature prevents coasting and inadvertent measurement of erroneously high tilt angles. The lubricity of the test containers can be expressed either by the angle at which sliding occurs or by the coefficient of static friction. Both measurements can be obtained from a scale on the front of the table. If the slip angle is less than 15°, preferably less than 13° it is considered that the bottle has been lubricous enough.

**[Examples]**

50cl green glass or flint glass water bottles were used as containers. The bottles had a tin oxide hot end coating. The initial HEC coating thickness according to different test series have an initial thickness of 40 to 55 CTU. In each series the bottles have the same initial coating thickness. For comparing the different series the thickness is calculated in relative values in % based on initial coating thickness of each series.

The test series start with a certain quantity of bottles, after certain washing cycle one bottle or several bottles is/is removed, if necessary dried and evaluated in the respective tests.

**Raw materials**

Zinc (II) chloride ($ZnCl_2$) was used as zinc compound. A solution comprising 0.22wt% of $ZnCl_2$ was used during the cleaning step.

Sodium hydroxide (NaOH) was used as alkaline source. A solution of 2wt% NaOH in water was used during the cleaning step.

As wax compound (W1), following products are used:

Candelilla Wax is used, having a melting point (range) from 68.5°C to 72.5°C and a saponification value between 43 and 65 mg KOH/g was used as wax compound (W1) here called (W1a).

A wax compound comprising essentially C18-C36 acid glycol ester melting point of 72.6°C and a saponification value 169 mg KOH/g was used as wax compound (W1) here called (W1b).

As comparative examples an oxidized polyethylene wax having a melting point (range) from 105°C to 111°C and a saponification value of less than 30 mg KOH/g was used as comparative here called (C1).

Another comparative series was made by just washing the recycled containers without an application of a coating comprising a wax compound.

The wax compound is applied as a suspension by dipping the bottles inside said suspension.

The results are summarized in tables 1 to 3.

Table 1 - results of burst pressure with comparative series without any wax compound coating and comparative wax (C1)

|  | No coating | | With wax (C1) | |
|---|---|---|---|---|
|  | Burst Pressure | | Burst Pressure | |
| Cycle | [bar] | [%] | [bar] | [%] |
| 0 | 32.9 | 100 | 32.9 | 100 |
| 2 | 14.6 | 44 | 17.3 | 53 |
| 5 | 12.1 | 37 | 15 | 46 |
| 10 | 11.6 | 35 | 14.2 | 43 |
| 25 | 10.8 | 33 | 12.5 | 38 |

Table 1 shows that during washing cycles the burst pressure is decreased significantly falling rapidly under 50% of the initial burst pressure.

Table 2 - results with wax compound (W1a)

|  | HEC thickness | | Burst Pressure | | Slip Angle | Visual appearance | Visual scuffing |
|---|---|---|---|---|---|---|---|
| Cycle | [CTU] | [%] | [bar] | [%] | [°] |  |  |
| 0 | 40 | 100 | 32.9 | 0 | - | Ok | No scuff |
| 2 | - | - | 29.0 | 88 | - | Ok | No scuff |
| 5 | 38 | 95 | 28.6 | 87 | 12 | Ok | No scuff |
| 10 | 35 | 87.5 | 25.0 | 76 | 10 | Ok | No scuff |
| 15 | 40 | 100 | - | - | 10 | Ok | No scuff |
| 20 | 41 | 102.5 | - | - | 12 | Ok | No scuff |
| 25 | - | - | 20.3 | 62 | 12 | Some spots | No scuff |
| 30 | 40 | 100 | - | - | 10 | Some spots | No scuff |

Table 2 shows that the HEC is maintained during washing cycles and that the burst pressure is maintained at a satisfying level up to 25 recycling cycles.

Table 3 - results with wax compound (W1b)

| | HEC thickness | | Burst Pressure | | Slip Angle | Visual appearance | Visual scuffing |
|---|---|---|---|---|---|---|---|
| Cycle | [CTU] | [%] | [bar] | [%] | [°] | | |
| 0 | 55 | 100 | 35.8 | 100 | - | Ok | No scuff |
| 2 | - | - | 34.4 | 96 | - | | |
| 5 | 55 | 100 | 34.0 | 95 | 13 | Ok | No scuff |
| 10 | 55 | 100 | 33.5 | 94 | 13 | Ok | No scuff |
| 15 | 53 | 96.3 | - | - | 13 | Ok | No scuff |
| 20 | 56 | 101.8 | - | - | 12 | Ok | No scuff |
| 25 | 56 | 101.8 | 32.1 | 90 | 12 | Ok | No scuff |
| 30 | 52 | 94.5 | | | 12 | Ok | No scuff |
| 35 | 52 | 94.5 | | | 15 | Ok | No scuff |

Table 3 shows that the HEC is maintained during washing cycles and that the burst pressure is maintained at a satisfying high level up to 25 recycling cycles.

**Claims**

1. A process for treatment of glass container said process comprises the steps of:

   i) cleaning by washing the container with a washing composition comprising a zinc or aluminium compound at temperature less than 90°C
   ii) applying a coating on the container with a composition comprising a wax compound (W1).

2. The process according to claim 1 **characterized in that** glass container is a returnable glass container.

3. The process according to any of claims 1 to 2, **characterized in that** the washing composition comprises one or more alkaline sources.

4. The process according to any of claims 1 to 2, **characterized in that** the washing composition comprises hydroxide ions.

5. The process according to any of claims 1 to 4, **characterized in that** the wax compound (W1) has a melting point below 85°C.

6. The process according to any of claims 1 to 4, **characterized in that** the wax compound (W1) has a melting point between 60°C and 85°C and preferably between 65°C and 80°C.

7. The process according to any of claims 1 to 6, **characterized in that** the saponification number of wax compound (W1) is above 20 mg KOH/g.

8. The process according to any of claims 1 to 6, **characterized in that** the saponification number of wax compound (W1) is between 20 mg KOH/g and 250 mg KOH/g.

9. The process according to any of claims 1 to 8, **characterized in that** the acid number of the wax compound (W1) is above 1 mg KOH/g.

10. The process according to any of claims 1 to 9, **characterized in that** the acid number of the wax compound (W1) is below 24 mg KOH/g.

11. The process according to any of claims 1 to 8, **characterized in that** the acid number of the wax compound (W1) is between 2 mg KOH/g and 24 mg KOH/g, still more preferably between 2.5 mg KOH/g and 23 mg KOH/g, even still more preferably between 3 mg KOH/g and 22 mg KOH/g, advantageously between 3.5 mg KOH/g and 21 mg KOH/g and more advantageously between 4 mg KOH/g and 20 mg KOH/g.

12. The process according to any of claims 1 to 11, **characterized in that** washing composition is comprising a zinc compound, preferably in form of an ion.

13. The process according to claim 12, **characterized in that** the washing composition is comprising a quantity of the zinc ion between 0.00025mol/l and 0.1mol/l.

14. The process according to any of claims 4 to 13, **characterized in that** the quantity of the hydroxide ions in the washing composition is between 0.05mol/l and 2.5mol/l.

15. The process according to any of claims 4 to 14, **characterized in that** molar ratio between the zinc or aluminium ion in the washing composition and the OH- ions in the washing composition and is at least 0.002.

16. The process according to any of claims 4 to 15, **characterized in that** molar ratio between the zinc or aluminium ion in the washing composition and the OH- ions in the washing composition is at most 0.5.

17. The use of a process according to any of claims 1 to 16 for reducing the loss of burst pressure.

Europäisches
Patentamt

European
Patent Office

Office européen
des brevets

# EUROPEAN SEARCH REPORT

Application Number

EP 17 21 0515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 017 410 A (SORGENFREI MALACHI E ET AL) 12 April 1977 (1977-04-12)<br>* column 12, line 57; example 1 *<br>* column 11, line 22 - line 28 *<br>----- | 1-17 | INV.<br>C03C17/28<br>C11D3/00<br>C11D3/04 |
| X | US 3 445 275 A (BOGART BURTON S) 20 May 1969 (1969-05-20)<br>* column 1, line 57 - line 60 *<br>----- | 5,6 | |

TECHNICAL FIELDS
SEARCHED      (IPC)

C03C
C11D

The present search report has been drawn up for all claims

| Place of search | Date of completion of the search | Examiner |
|---|---|---|
| Munich | 5 March 2018 | Friederich, Pierre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 21 0515

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2018

| Patent document cited in search report | | Publication date | Patent family member(s) | Publication date |
|---|---|---|---|---|
| US 4017410 | A | 12-04-1977 | NONE | |
| US 3445275 | A | 20-05-1969 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4001133 A
- US 4908148 A

- US 20060128602 A